# EUROPÄISCHE PATENTSCHRIFT

(11) **EP 1 444 111 B1**
(45) Veröffentlichungstag und Bekanntmachung des Hinweises auf die Patenterteilung: **15.11.2006**
(21) Anmeldenummer: 03735434.7
(22) Anmeldetag: 22.05.2003
(51) Int. Cl.: B60P 1/00, B60R 5/04

(54) **BELADEVORRICHTUNG FUER EIN FAHRZEUG UMFASSEND LADEBODEN MIT SCHRAEGE**
LOADING DEVICE FOR A VEHICLE COMPRISING LOADING DECK WITH SLOPE
DISPOSITIF DE CHARGEMENT POUR VEHICULE COMPRENANT PLATE-FORME DE CHARGEMENT AVEC ADOSSEMENT

(30) Priorität: 23.05.2002 DE 10222967
(43) Veröffentlichungstag der Anmeldung: 11.08.2004
(73) Patentinhaber: Faurecia Innenraum Systeme GmbH, 76767 Hagenbach (DE)
(72) Erfinder: ALBRECHT, Nick, 38550 Isenbüttel (DE); WULF, Thoma, 38518 Gifhorn (DE)
(74) Vertreter: Richardt, Markus Albert
(86) Internationale Anmeldenummer: PCT/EP2003/005352
(87) Internationale Veröffentlichungsnummer: WO 2003/099607

(56) Entgegenhaltungen:
- DE-A- 10 054 572
- DE-A- 19 858 308
- DE-U- 9 300 013
- US-A- 3 381 835
- US-A- 3 961 715

## Beschreibung

Die Erfindung betrifft eine Beladevorrichtung für ein Fahrzeug nach dem Oberbegriff des Patentanspruchs 1. Eine solche Vorrichtung is aus DE 10054572 A bekannt.

Aus dem Stand der Technik sind verschiedene ausziehbare Ladeböden und Beladevorrichtungen bekannt. Aus der DE-OS 23 02 972 ist eine ausziehbare Ladefläche für Kombifahrzeuge bekannt. Hierbei sind auf der Ladefläche des Fahrzeugs Führungsschienen angeordnet. Die ausziehbare Ladefläche wird auf diese Führungsschienen aufgebracht und kann auf den Führungsschienen auf Rollen bewegt werden. Das Ladegut kann auf die ausgefahrene Ladefläche gesetzt und dann in den Laderaum des Fahrzeugs eingefahren werden.

Aus der DE 296 08 955 U1 ist eine Beladevorrichtung für Pkws oder Transporter bekannt. Diese Beladevorrichtung besteht aus einer Führungseinheit, die am Boden des Laderaums des Fahrzeugs montiert wird. Auf der Führungseinheit befindet sich eine verschiebbare Ladeplatte, die aus einer Transportposition innerhalb des Laderaums in eine Belade- oder Entladeposition bewegbar ist, in der die Ladeplatte sich außerhalb des Fahrzeugs hinter dem Fahrzeugheck befindet.

Aus der DE 196 19 126 A1 ist eine Beladeeinrichtung an einem Kraftfahrzeug mit einer schwenkbaren Heckklappe bekannt. In einem hinteren von der Heckklappe verschließbaren Laderaum des Kraftfahrzeugs sind an beiden Seiten des Bodens des Laderaums befestigte Führungsschienen vorgesehen, die in Fahrzeuglängsrichtung verlaufen. Zum Beladen ist es erforderlich, dass eine Heckklappe des Fahrzeugs um eine-untere Fahrzeugquerachse nach hinten in eine horizontale Beladestellung geschwenkt wird.

Aus der DE 197 49 158 C2 ist ein Ladeboden für den Laderaum eines Fahrzeugs bekannt. Der Ladeboden ist auf Rollen gelagert und zum Teil etwa parallel zum Fahrzeugboden aus dem Laderaum ausfahrbar. Quer zur Fahrtrichtung weist der Ladeboden eine Sollknickstelle zur Verbesserung des Crash-Verhaltens auf.

Aus der DE 197 31 324 A1 ist ein ausziehbarer Ladeboden für ein Fahrzeug bekannt, der über Laufrollen entlang von Stützschienen verlagerbar ist. Mit dem Fahrzeugkörper sind die Stützschienen dabei so verbunden, dass sie in der Höhe verstellbar sind. Die Höhenverstellung erfolgt über zwei Parallelogramm-Lenker unter Zuhilfenahme eines Verstellzylinders.

Ein weiterer etwa parallel zum Fahrzeugboden auf Führungsschienen aus dem Laderaum ausfahrbarer Ladeboden ist aus der US 3,132,755 bekannt. Weiterer Stand der Technik ist aus DE 198 15 466 A1, DE 41 28 008 A1, DE 100 12 767 A1 und DE 298 10 132 U bekannt.

Ausfahrbare Ladeböden und Beladevorrichtungen der genannten Art ermöglichen ein wesentlich vereinfachtes Be- und Entladen des Fahrzeugs durch Auflegen der Fracht auf den rollfähigen Ladeboden. Auf den ausgefahrenen Ladeboden wird dabei eine Last aufgelegt, die mit geringem Kraftaufwand mit dem Ladeboden in das Fahrzeuginnere geschoben werden kann. Ein gemeinsamer Nachteil der vorbekannten Ladeböden und Beladevorrichtungen ist jedoch, dass aufgrund der Ausziehmechanik für den Ladeboden Laderaum im beträchtlichen Umfang verloren geht. Ein weiterer Nachteil ist die konstruktiv aufwendige Gestaltung vorbekannter Ladeböden und Beladevorrichtungen.

Der Erfindung liegt daher die Aufgabe zu Grunde eine alternative Beladevorrichtung für ein Fahrzeug zu schaffen.

Die der Erfindung zu Grunde liegende Aufgabe wird mit den Merkmalen des unabhängigen Patentanspruchs 1 gelöst. Bevorzugte Ausführungsformen der Erfindung sind in den abhängigen Patentansprüchen angegeben.

Ein besonderer Vorteil der Erfindung ist, dass der Ladenutzraum nur unwesentlich durch den Ladeboden und die entsprechende Beladevorrichtung verkleinert wird. Ein weiterer Vorteil ist, dass eine erfindungsgemäße Beladevorrichtung mit einer geringen Anzahl von Bauelementen realisiert werden kann. Aufgrund dessen kann eine solche Vorrichtung kostengünstig hergestellt werden und ist zugleich besonders zuverlässig.

Die Schräge ist an der Stirnseite des Ladebodens ausgebildet, die der Ladekante in eingefahrenem Zustand des Ladebodens gegenüberliegt. Beim Anheben des Ladebodens beschreibt dieser eine schräg nach oben gerichtete Bewegung, wobei sich der Ladeboden mit seiner Schräge an der Ladekante abstützt. Zwischen der Schräge und der Ladekante sind Roll- oder Gleitmittel angeordnet, die beim Anheben wirksam werden. Beispielsweise ist an der Ladekante eine Rolle angeordnet, die von der Schräge beim Anheben des Ladebodens überfahren wird. An der Schräge des Ladebodens und/oder an der Ladekante angeordnete Roll- oder Gleitmittel erleichtern die Bewegung des Ladebodens entlang der Schräge und reduzieren die hierbei auftretenden Reibungskräfte. Die Roll- oder Gleitmittel erleichtern auch die Ausfahrbewegung des Ladebodens in horizontaler Richtung aus dem Laderaum des Fahrzeugs, indem die hierbei auftretenden Reibungskräfte zwischen der Unterseite des Ladebodens und der Oberseite der Ladekante reduziert werden. Besonders vorteilhaft ist es, wenn solche Roll-oder Gleitmittel an der oberen Kante der Ladekante, die der Schräge des Ladebodens in eingefahrenem Zustand gegenüberliegt, angeordnet sind. In diesem Fall werden die gleichen Roll- oder Gleitmittel sowohl während des Anhebens des Ladebodens als auch während des Ausfahrens des Ladebodens in horizontaler Richtung wirksam.

Nach einer weiteren bevorzugten Ausführungsform der Erfindung wird der Ladeboden an seiner der Rückbank des Fahrzeugs gegenüberliegenden Seite durch ein Abstandselement getragen, dessen unteres Ende in eine Kulissenführung eingreift. Die Kulissenführung ist dabei unterhalb des Ladebodens in Längsrichtung angeordnet, zum Beispiel an den Seitenwänden des Fahrzeugs oder an dem Fahrzeugboden. Zum Ausziehen oder Ausfahren des Ladebodens aus dem Laderaum durchläuft das untere Ende des Abstandselements die Kulissenführung in die Auszieh- bzw. Ausfahrrichtung, während das andere Ende des Ladebodens aufgrund der über die Ladekante bewegte Schräge zunächst nach oben bewegt wird und dann über die Ladekante in horizontaler Richtung aus dem Beladeraum ausfährt.

Nach einer bevorzugten Ausführungsform der Erfindung hat die Kulissenführung einen ersten Abschnitt, der im Wesentlichen parallel zu der Schräge verläuft und einen zweiten Abschnitt, der im Wesentlichen horizontal verläuft. Zum Ausziehen oder Ausfahren des Ladebodens wird das untere Ende des Abstandselements zunächst entlang des ersten schräg nach oben verlaufenden Abschnitts der Kulissenführung bewegt, während das andere Ende des Ladebodens eine im Wesentlichen parallel hierzu verlaufende Bahn entlang der Schräge der Ladekante beschreibt.

Die Länge des ersten Abschnitts der Kulissenführung ist dabei so gewählt, dass sobald das untere Ende des Abstandselements das Ende des ersten Abschnitts der Kulissenführung erreicht hat, der Endbereich des Ladebodens die obere Begrenzung der Ladekante erreicht hat. Aufgrund dessen wird also der Ladeboden in einer schräg nach oben gerichteten Bewegung angehoben und gleichzeitig ein Stück weit in die Auszieh- bzw. Ausfahrrichtung bewegt. Vorzugsweise verbleibt der Ladeboden dabei im Wesentlichen in der Horizontalen, d.h. parallel zum Fahrzeugboden.

Nach dieser schräg nach oben gerichteten Bewegung läuft das untere Ende des Abstandselements entlang des zweiten Abschnitts der Kulissenführung, welcher im Wesentlichen horizontal verläuft. Dabei gleitet die Unterseite des Ladebodens über die Ladekante, so dass der Ladeboden im Wesentlichen in horizontaler Richtung aus dem Laderaum ausgezogen oder ausgefahren wird.

Nach einer weiteren bevorzugten Ausführungsform der Erfindung wird das Abstandselement durch an dem Ladeboden angeordnete Lenker realisiert, die eine Welle halten, an deren Enden sich Roll- oder Gleitmittel befinden. Die Enden der Welle greifen in die Kulissenführungen ein. Durch Antrieb der Welle über zum Beispiel einen Zahn- oder Keilriemenantrieb wird eine Antriebskraft eingeleitet, durch die der Ladeboden angehoben wird.

Nach einer weiteren bevorzugten Ausführungsform der Erfindung ist der Antrieb an der Karosserie des Fahrzeugs oder an der Unterseite des Ladebodens angeordnet. Die Antriebskraft wird von dem Antrieb auf die Welle über einen Zahn- oder Keilriemen über eine Umlenkrolle übertragen, die eine Vorspannung auf den Riemen ausübt. Alternativ kann auch eine Kette zur Transmission verwendet werden. Bei dem Antrieb kann es sich um einen mechanischen, elektrischen, pneumatischen oder hydraulischen Antrieb handeln.

Nach einer weiteren bevorzugten Ausführungsform der Erfindung befinden sich an dem Endbereich des Ladebodens und / oder an der Ladekante Führungselemente, die zur Führung der Aus- und / oder Einfahrbewegung des Ladebodens entlang der Schräge dienen. Beispielsweise hat die an dem Ladeboden angeordnete Schräge hierzu ein oder mehrere Ausnehmungen, in die entsprechende an der Ladekante angeordnete Elemente eingreifen.

Nach einer weiteren bevorzugten Ausführungsform der Erfindung sind an den Seitenwänden des Laderaums Roll- oder Gleitmittel angeordnet, um die Aus- oder Einfahrbewegung des Ladebodens zu führen und insbesondere ein Verkanten bei der Bewegung des Ladebodens zu vermeiden. Beispielsweise sind hierfür federbelastete Gleiterteile an den Seitenwänden entlang der Bewegung des Ladebodens beim Aus- bzw. Einfahren angeordnet.

Im Weiteren werden bevorzugte Ausführungsformen der Erfindung mit Bezugnahme auf die Zeichnungen näher erläutert. Es zeigen:
- Figur 1: eine Seitenansicht des Laderaums eines Fahrzeugs mit einer bevorzugten Ausführungsform einer erfindungsgemäßen Beladevorrichtung,
- Figur 2: eine Schnittansicht des Laderaums der Figur 1 im Bereich der Ladekante,
- Figur 3: eine Schnittansicht des Laderaums der Figur 1 im Bereich der Kulissenführung,
- Figur 4: eine Ausführungsform für einen Antrieb,
- Figur 5: eine Detailansicht des Antriebs der Figur 4.

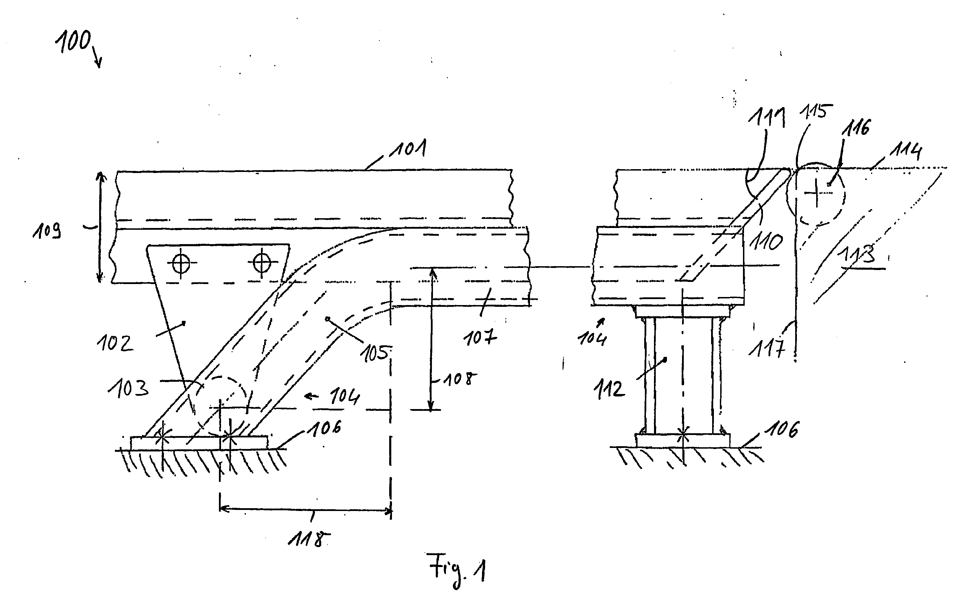

Die Figur 1 zeigt eine Beladevorrichtung 100, die in dem Laderaum eines Kraftfahrzeugs angeordnet ist. Bei dem Kraftfahrzeug handelt es sich vorzugsweise um ein Kraftfahrzeug mit Heckklappe.

Die Beladevorrichtung 100 hat einen Ladeboden 101, der aus dem Laderaum ausgefahren werden kann. An seinem Endbereich gegenüber den Rücksitzen des Kraftfahrzeugs hat der Ladeboden 101 ein Abstandselement. Dieses wird durch Lenker 102 gebildet, die an beiden Seiten des Ladebodens 101 angeordnet sind. An den Lenkern 102 befinden sich Antriebsrollen 103, die in eine Kulissenführung 104 eingreifen. Beispielsweise sind Kulissenführungen 104 in den beiden Seitenwänden des Fahrzeugs angeordnet. Der Abschnitt 105 der Kulissenführung erstreckt sich von dem Fahrzeugboden 106 ausgehend schräg nach oben.

An den Abschnitt 105 der Kulissenführung 104 schließt sich ein horizontal verlaufender Abschnitt 107 der Kulissenführung an. Der Abschnitt 107 der Kulissenführung 104 dient dazu, den Ladeboden 101 um eine Distanz 108 anzuheben, die in etwa der Dicke 109 des Ladebodens 101 entspricht (Zeichnung nicht maßstäblich).

An seinem anderen Ende hat der Ladeboden 101 eine Schräge 110, die mit der Oberseite des Ladebodens 101 einen Winkel 111 einschließt. Der Winkel 111 beträgt z.B. 25° bis 60°, vorzugsweise 45°.

Der horizontal verlaufende Abschnitt 107 der Kulissenführung 104 wird durch eine Stütze 112 gehalten, die auf dem Fahrzeugboden 106 angeordnet ist.

In Richtung des Fahrzeughecks wird der Laderaum durch eine Ladekante 113 begrenzt. Im eingefahrenen Zustand des Ladebodens 101 bilden die Oberseite des Ladebodens 101 und die Oberseite 114 der Ladekante 113 eine im Wesentlichen durchgehende ebene Ladefläche. Im Bereich der durch die Ladekante 113 gebildeten Kante 115 ist zumindest eine Gleitkugel 116 angeordnet.

Die Gleitkugel ragt etwas über die Oberseite 114 der Ladekante 113 hinaus sowie auch über die Seite 116 der Ladekante 113. Die Gleitkugel 116 dient zur Erleichterung des Anhebens des Ladebodens 101 sowie auch zur Erleichterung des Ausfahrens des Ladebodens 101 in horizontaler Richtung. Gleiches gilt für das Einfahren bzw. das Absenken des Ladebodens in der umgekehrten Richtung.

Zum Ausfahren des Ladebodens 101 aus der in der Figur 1 dargestellten Position wird eine Antriebskraft auf den Ladeboden 101 ausgeübt. Dies kann manuell erfolgen, indem beispielsweise an einem an der Oberseite des Ladebodens 101 angeordneten Griff gezogen wird. Die Antriebskraft kann aber auch durch einen mechanischen, elektrischen, pneumatischen oder hydraulischen Antrieb geliefert werden.

Aufgrund der Antriebskraft werden die Antriebsrollen 103 durch die Abschnitte 105 der Kulissenführung 104 hindurchbewegt. Gleichzeitig läuft die Schräge 110 über die Gleitkugel 116.

Wenn die Antriebsrollen 103 das Ende der Abschnitte 105 der Kulissenführung 104 erreicht haben, ist der Ladeboden 101 um die Distanz 108 in vertikaler Richtung angehoben worden und hat sich gleichzeitig um eine Distanz 118 in horizontaler Richtung in die Ausfahrrichtung bewegt.

In dieser Position befindet sich die Unterseite des Ladebodens 101 in etwa auf der Höhe der Oberseite 114 der Ladekante 113 und liegt auf der Gleitkugel 116 auf.

Im Weiteren werden die Antriebsrollen 103 durch die Abschnitte 107 der Kulissenführung 104 bewegt, so dass der Ladeboden 101 in horizontaler Richtung aus dem Laderaum des Fahrzeugs ausgefahren wird. Dabei läuft die Unterseite des Ladebodens 101 über die Gleitkugel 116. Besonders vorteilhaft ist hierbei, dass die Gleitkugel 116 sowohl beim Anheben des Ladebodens als auch beim Ausfahren des Ladebodens in horizontaler Richtung wirksam wird.

In der ausgefahrenen Position kann der Ladeboden 101 dann bequem beladen werden. Nach dem Beladen kann der Ladeboden 101 mit samt der Ladung zum Beispiel manuell in den Laderaum zurückgeschoben werden. Hierzu bedarf es keiner großen Anstrengung, da die Antriebsrollen 103 aufgrund der Schwerkraft entlang des Abschnitts 105 der Kulissenführung 104 in die Ausgangsposition zurückfahren. Alternativ wird auch das Einfahren des Ladebodens 101 durch einen Antrieb bewirkt.

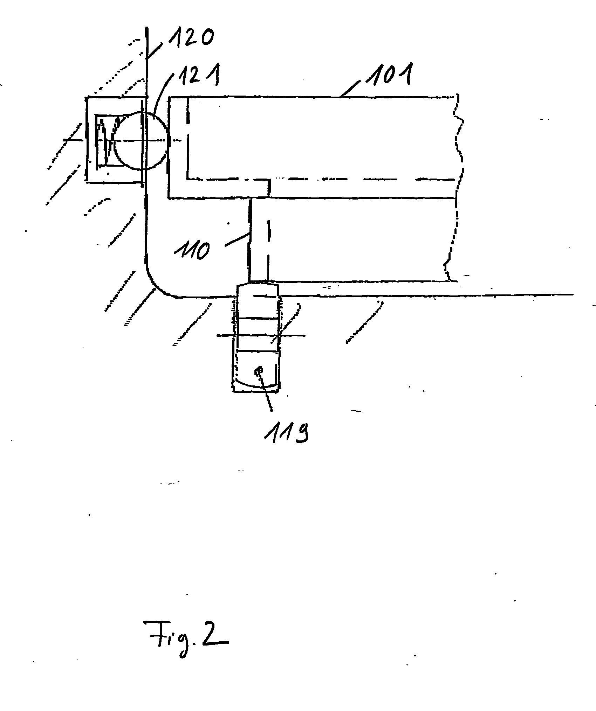

Die Figur 2 zeigt einen Schnitt der Figur 1, wobei anstelle einer Gleitkugel 116 eine Laufrolle 119 vorgesehen ist. In den Seitenwänden 120 des Fahrzeugs sind entlang der Bewegung des Ladebodens 101 Gleitkugeln 121 angeordnet, die ein Verkanten des Ladebodens 101 beim Ein- oder Ausfahren verhindern. Alternativ können auch federbelastete Gleiter oder andere Führungselemente vorgesehen sein.

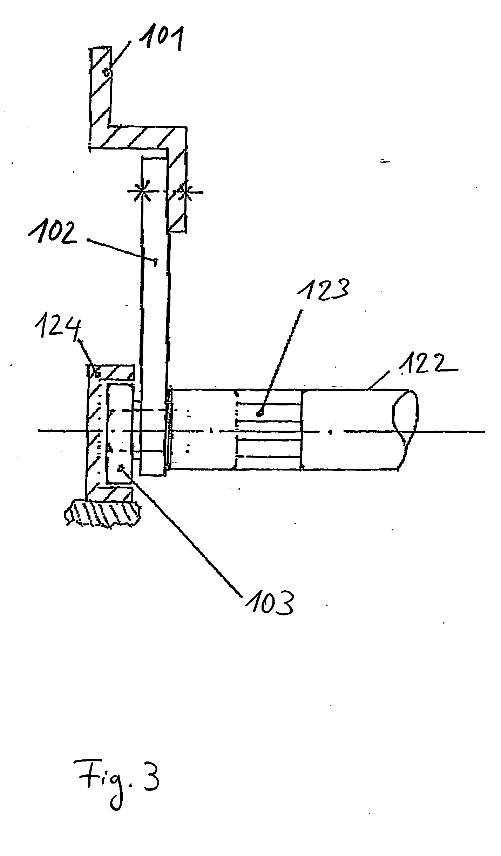

Die Figur 3 zeigt eine Schnittansicht im Bereich der Lenker 102. Die Lenker 102 halten eine Welle 122 auf der sich ein Zahnrad 123 befindet. Das Zahnrad 123 dient zur Einleitung einer Antriebskraft in die Welle 122. Anstelle eines Zahnrads 123 kann auch eine Keilriemenscheibe oder dergleichen vorgesehen sein.

An den Enden der Welle 122 sind die Antriebsrollen 103 angeordnet, die in ein U-Profil 124 eingreifen, durch welches die Kulissenführung 104 gebildet wird. Wenn eine Antriebskraft auf das Zahnrad 123 wirkt, so wird diese über die Welle 122 auf die Antriebsrollen 103 übertragen, so dass die Antriebsrollen 103 das U-Profil 124 durchfahren. Dadurch wird der Ladeboden 101 je nach der Antriebsrichtung aus- oder eingefahren.

Die Antriebsrollen 103 können für eine formschlüssige Kraftübertragung auf das U-Profil 124 mit je einem Zahnrad ausgestattet sein, welches in ein entsprechendes Zahnprofil in der Lauffläche des U-Profils 124 eingreift.

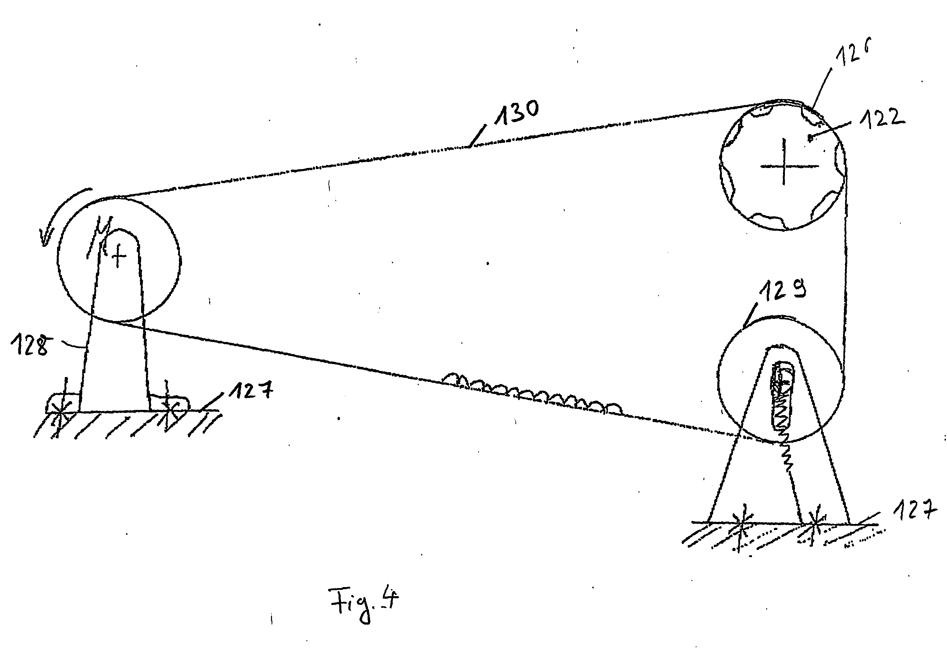

Die Figur 4 zeigt eine Vorrichtung zum Antrieb der Welle 122 (vgl. Figur 3). Die Vorrichtung beinhaltet einen an der Karosserie 127 des Fahrzeugs ortsfest angeordneten Antrieb 128 und eine Umlenkrolle 129. Über den Antrieb 128, die Umlenkrolle 129 und die Welle 122 bzw. das auf der Welle 122 befindliche Zahnrad 123 wird ein Zahnriemen 130 geführt. Die von dem Antrieb 128 auf den Zahnriemen 130 wirkende Antriebskraft wird so auf die Welle 122 übertragen, um die Rollen 103 in dem U-Profil 124 anzutreiben, so dass je nach der Antriebsrichtung der Ladeboden 101 aus- oder eingefahren wird.

Vorzugsweise ist die Umlenkrolle 129 an der Karosserie 127 federbelastet angeordnet, um den Zahnriemen 130 vorzuspannen. Anstelle eines Zahnriemens kann auch ein Keilriemen verwendet werden.

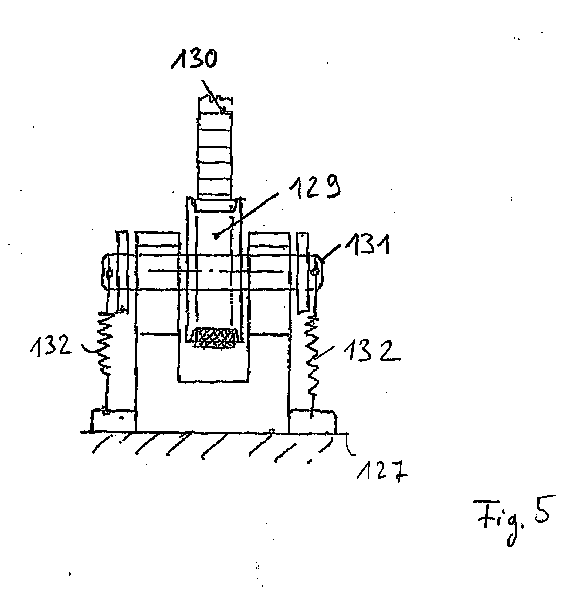

Die Figur 5 zeigt eine Schnittansicht der Umlenkrolle 129. Diese ist auf einer Achse 131 angeordnet. Die Achse 131 ist mit einer Kraft in Richtung auf die Karosserie 127 belastet, die von den Zugelementen 132 auf die Endbereiche der Achse 131 ausgeübt werden. Dadurch wird der über die Umlenkrolle 129 geführte Zahnriemen 130 vorgespannt.

### Bezugszeichenliste

- Beladevorrichtung: 100
- Ladeboden: 101
- Lenker: 102
- Antriebsrolle: 103
- Kulissenführung: 104
- Abschnitt: 105
- Fahrzeugboden: 106
- Abschnitt: 107
- Distanz: 108
- Dicke: 109
- Schräge: 110
- Winkel: 111
- Stütze: 112
- Ladekante: 113
- Oberseite: 114
- Kante: 115
- Gleitkugel: 116
- Seite: 117
- Distanz: 118
- Laufrolle: 119
- Seitenwand: 120
- Gleitkugel: 121
- Welle: 122
- Zahnrad: 123
- U-Profil: 124
- Karosserie: 127
- Antrieb: 128
- Umlenkrolle: 129
- Zahnriemen: 130
- Achse: 131
- Zugelement: 132

## Patentansprüche

1. Beladevorrichtung für ein Fahrzeug, mit einem im Einsatz in einem Laderaum des Fahrzeugs angeordneten Ladeboden (101), mit Mitteln (102, 103) zum Anheben des Ladebodens über eine Ladekante (113), und mit einer Kulissenführung (105) für den Ladeboden, **dadurch gekennzeichnet, dass** die Mittel zum Anheben eine an dem Ladeboden angeordnete Schräge (110) zum Abstützen des Ladebodens an der Ladekante während des Anhebens aufweisen, und dass im Bereich der Ladekante (113) Roll- oder Gleitmittel derart angeordnet sind, dass die Roll- oder Gleitmittel sowohl beim Anheben des Ladebodens (101) als auch bei einer horizontalen Bewegung des Ladebodens (101) beim Ausfahren oder Einfahren desselben aus dem oder in den Laderaum des Fahrzeugs wirksam sind.

2. Beladevorrichtung nach Anspruch 1, **dadurch gekennzeichnet, dass** die Roll-oder Gleitmittel durch eine an der Ladekante angeordnete Gleitkugel oder Rolle (116, 119) gebildet werden, wobei die Gleitkugel oder Rolle (116, 119) beim Anheben des Ladebodens und bei der horizontalen Bewegung des Ladebodens überfahren wird.

3. Beladevorrichtung nach Anspruch 1 oder 2, **dadurch gekennzeichnet, dass** die Schräge (110) an der der Ladekante (113) im eingefahrenen Zustand gegenüberliegenden Stirnseite des Ladebodens (101) angeordnet ist.

4. Beladevorrichtung nach einem der vorhergehenden Ansprüche 1, 2 oder 3, **dadurch gekennzeichnet, dass** die Kulissenführung (105) zur Anordnung an den Längsseiten des Laderaums vorgesehen ist, und dass ein an einem ersten Endbereich des Ladebodens (101) angeordneten Abstandselement vorgesehen ist, das zum Eingriff in die Kulissenführung (105) ausgebildet ist.

5. Beladevorrichtung nach einem der vorhergehenden Ansprüche 1 bis 4, **gekennzeichnet durch** einen Antrieb zum Ausfahren und / oder zum Einfahren des Ladebodens (101) aus einem Laderaum des Fahrzeugs, wobei der Antrieb zur Anordnung an der Karosserie des Fahrzeugs vorgesehen ist oder der Antrieb an der Unterseite des Ladebodens (101) angeordnet ist.

6. Beladevorrichtung nach Anspruch 4, **dadurch gekennzeichnet, dass** das Abstandselement an den Längsseiten des Ladebodens (101) angeordnete Lenker (102), eine Welle (122), die von den Lenkern gehalten wird, und ein an einem Ende der Welle angeordneten Antriebselement (103) zum Eingriff in die Kulissenführung (105) aufweist.

7. Beladevorrichtung nach einem der vorhergehenden Ansprüche, **gekennzeichnet durch** Mittel (129) zum Umlenken und Vorspannen eines Zahn- oder Keilriemens.

## Claims

1. Loading apparatus for a vehicle with a loading floor (101) in service arranged in a load space of a vehicle with means (102, 103) for elevating the loading floor over a loading border (113) and with a link slide (105) for the loading floor, **characterised in that** the means for elevating have a chamfer (110) placed at the loading floor for supporting the loading floor on the loading border during the elevation and **in that** in the area of the loading border (113) rolling or sliding means are disposed in a way that the rolling or sliding means are effective both during the elevation of the loading floor (101) and during a horizontal motion of the loading floor (101) when extending into or retracting from the loading space of the vehicle.

2. Loading apparatus according to claim 1, **characterised in that** the rolling or sliding means are a sliding ball or roll (116, 119) wherein the sliding ball or roll (116, 119) is passed over during the elevation of the loading floor and during the horizontal motion of the loading floor.

3. Loading apparatus according to claim 1 or 2, **characterized in that** the chamfer (110) is disposed at the front end of the loading floor (101) opposed to the loading border (113) when in retracted state.

4. Loading apparatus according to one of the previous claims 1, 2 or 3, **characterized in that** the link slide (105) is disposed at the longitudinal side of the loading floor and that the distance element is disposed at a first end zone of the loading floor (101), designed for the encroachment on the link slide (105).

5. Loading apparatus according to one of the previous claims 1 to 4, **characterized by** a drive for extending and/or retracting the loading floor (101) from the load place, whereas the drive is disposed at the car body or the drive is disposed beneath the loading floor (101).

6. Loading apparatus according to claim 4, **characterized in that** the distance element on the longitudinal side of the loading floor has guides (102), an axle (122) which is supported by the guides and a driving element disposed at the end of the axle for engaging with the link slide (105).

7. Loading apparatus according to one of the previous claims, **characterized by** means (129) of deflection and harnessing of a drive belt or a V-belt.

## Revendications

1. Dispositif de chargement pour un véhicule, avec une plate-forme de chargement (101) disposée dans l'espace de chargement du véhicule, avec des moyens (102, 103) pour l'élévation de la plate-forme de chargement sur un chant de chargement (113), et un guidage par coulisse (105) pour la plate-forme de chargement, **caractérisé en ce que**, les moyens pour élévation présentent une partie inclinée (110) pour l'adossement de la plate-forme de chargement du chant de chargement pendant l'élévation, et que dans la zone du chant de chargement (113) sont disposés des moyens de roulage ou de glissement de sorte que les moyens de roulage ou glissement soient efficients tant à l'élévation de la plate-forme de chargement (101) qu'au mouvement horizontal de la plate-forme de chargement (101) à sa sortie ou l'entrée de, ou dans l'espace de chargement du véhicule.

2. Dispositif de chargement selon la revendication 1, **caractérisé en ce que**, les moyens de roulage ou de glissement sont formés d'une bille de glissement ou rouleau (116, 119) disposés sur le chant de chargement, de sorte que la bille de glissement ou le rouleau (116, 119) soit actionné à l'élévation de la plate-forme de chargement et au mouvement horizontal de la plate-forme de chargement.

3. Dispositif de chargement selon la revendication 1 ou 2, **caractérisé en ce que**, la partie inclinée (110) est disposée dans la partie frontale de la plate-forme (101) de chargement, opposée à l'égard du chant de chargement (113) dans l'état entré.

4. Dispositif de chargement selon l'une des revendications antérieures 1, 2 ou 3, **caractérisé en ce que**, le guidage par coulisse (105) est prévu sur les parties longitudinales de l'espace de chargement, et qu'il y a pourvu un élément d'écartement disposé à une première zone d'extrémité de la plate-forme de chargement (101) qui est pourvu pour intervenir dans le guidage par coulisse (105).

5. Dispositif de chargement selon l'une des revendications antérieures 1 à 4, **caractérisé en ce que**, par un système d'actionnement pour sortie et/ou pour entrée de la plate-forme de chargement (101) de l'espace de chargement du véhicule, où le système d'actionnement est disposé sur la carrosserie du véhicule et/ou est positionné sur la partie d'en bas de la plate-forme de chargement (101).

6. Dispositif de chargement selon la revendication 4, **caractérisé en ce que**, l'élément d'écartement sur les parties longitudinales de la plate-forme de chargement (101) présente des guidages (102), un arbre (122) qui est tenu de guidages, et un élément d'actionnement (103) fixé au bout de l'arbre pour intervenir dans le guidage par coulisse (105).

7. Dispositif de chargement selon l'une des revendications antérieures, **caractérisé par** des moyens (129) de changement de la direction et la précontrainte d'une courroie à denture ou trapézoïdale.
